# EUROPEAN PATENT APPLICATION

(11) **EP 1 885 151 A1**
(43) Date of publication of application: **06.02.2008**
(21) Application number: 07113324.3
(22) Date of filing: 27.07.2007
(51) Int. Cl.: H04Q 7/38

(54) **Apparatus and method for CCBS service in mobile communication system**

(30) Priority: 31.07.2006 KR 20060071951
(71) Applicant: Samsung Electronics Co., Ltd., Suwon-si Gyeonggi-do (KR)
(72) Inventor: Lee, You-Na, Gyeonggi-do (KR)
(74) Representative: Grünecker, Kinkeldey, Stockmair & Schwanhäusser Anwaltssozietät

(57) **Abstract**

Provided is an apparatus and method for Call Completion to Busy Subscriber (CCBS) service in a mobile communication system. The method includes determining if a MT is in a telephony possibility state, determining if the MT is using the CCBS service, sending a request for a priority of a Mobile Originator (MO) to the MT, transmitting a response to the network apparatus, storing information on a call of the MO in a queue of the network apparatus, and sending a notification of telephony possibility to the MO.

## Description

The present invention relates generally to a mobile communication system, and in particular, to an apparatus and method for applying a priority to a call and sending a notification to a user of a preset high-priority call, in Call Completion to Busy Subscriber (CCBS) service.

When a Mobile Terminal (MT) is in a Network Determined User Busy (NDUB) state, that is, when the receiver is in communication with other MTs or when a call fails because there is not enough of a communication path for the MT, a CCBS service stores information on the call experiencing the telephony failure in a queue of a network apparatus and after the MT is converted to a telephony possible state (that is, when it is out of the NDUB state), informs a sender that the MT is in the telephony possible state. In other words, the CCBS service is a service for providing to the sender then time when a telephony possibility exists.

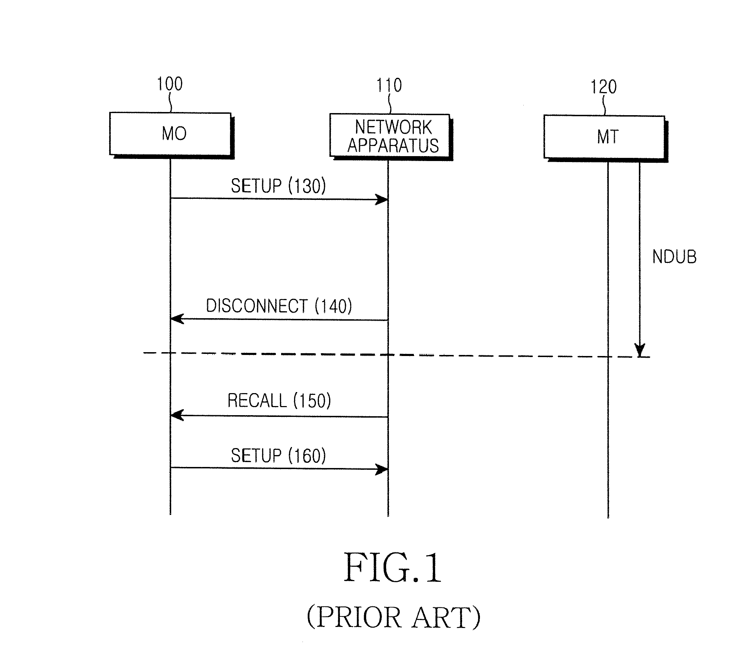

FIG. 1 illustrates a conventional CCBS service procedure.

Referring to FIG. 1, in step 130, a Mobile Originator (MO) 100 transmits a setup request message (SETUP) and attempts a telephony setup to a MT 120. In step 140, a network apparatus 110, receiving the setup request message transmits a circuit disconnect message (DISCONNECT) to the MO 100 to signal a disconnect.

In step 150, the network apparatus 110 transmits to the MO 100 a setup possibility notification message (RECALL) when the MT 120 is out of the NDUB state. In step 160, the MO 100, receiving the setup possibility notification message (RECALL), resumes a setup procedure when the MT 120 is in a telephony possibility state.

The CCBS service is provided using a message format used in a general call setting procedure. For example, specialized values for CCBS are added to a message such as SETUP, DISCONNECT, etc. and are forwarded to the appropriate entity. Networks generally provide a CCBS service in which a queue can be set for a maximum of five calls per user. However, because the number of calls that can be stored in the queue is five, it is impossible to provide a CCBS service for six or more calls.

The CCBS service is similar with "Call Waiting Supplementary Service", which is a call waiting service, in that the service informs a MT that another call is generated during a call. However, the call waiting service can allow the MT to check Call Line Identity Presentation (CLIP) information (that is, a sender's telephone number) and perform selective call conversion, whereas the CCBS service does not have a selective call attempt notification function.

In other words, there is a drawback that despite a call that a user preferentially desires to receive, a user cannot be provided with a CCBS service based on a priority because of the absence of a procedure to provide this information.

The present invention has been designed to substantially solve at least the above problems and/or disadvantages and to provide at least the advantages below. Accordingly, the object of the present invention is to provide an apparatus and method for a CCBS service, for applying a priority to a specific telephone number in a mobile communication system.

This object is solved by the subject matter of the independent claims.

Preferred embodiments are defined in the dependent claims.

An aspect of the present invention is to provide a network apparatus and method for providing notice of a higher-priority call to a mobile terminal when a call having a higher priority than a previously setup call stored in a given queue is setup.

A further aspect of the present invention is to provide an apparatus and method for providing a high-priority telephone number, thereby receiving a notification of an earlier setup than a low-priority telephone number when a call from the high-priority telephone number is setup.

According to one aspect of the present invention, there is provided a method for Call Completion to Busy Subscriber (CCBS) service in a mobile communication system. The method includes determining if a Mobile Terminal (MT) is in a telephony possibility state when a network apparatus receives a setup request for the MT from a Mobile Originator (MO); when the MT is not in a telephony possibility state, determining if the MT is in use of CCBS service; when the MT is in use of CCBS service, sending to the MT a request for a priority of the MO; transmitting to the network apparatus by the MT, a response to the request for priority including the priority; storing, by the network apparatus receiving the response, information on a call of the MO in a queue of the network apparatus according to the priority included in the response; and when the MT is in a telephony possibility state, sending, by the network apparatus, a notification of possible calls in a sequence of the call information stored in the queue to the MO.

According to another aspect of the present invention, there is provided a network apparatus for CCBS service in a mobile communication system. The apparatus includes a priority comparator, a priority control unit, and a controller. The priority comparator determines if a MT that is not in a telephony possibility state is in use of the CCBS service by a control and provision information of the controller. The priority control unit stores call information on an MO in a queue for the CCBS service according to a priority by the control and provision information of the controller. Upon receipt of a setup request for the MT from an MO, the controller controls the priority comparator to determine if the MT is in use of the CCBS service. The controller sends a request for a priority of the MO to the MT. The controller receives and provides a response to the priority control unit. The controller controls the priority control unit to store the call information according to the priority. When the MT is in a telephony possibility state, the controller sends a notification of possible calls in a sequence of the call information stored in the queue to the MO.

According to a further aspect of the present invention, there is provided a mobile terminal for CCBS service in a mobile communication system. The terminal includes a priority analyzer, a priority comparator, and a controller. The priority analyzer acquires information on a MT by a control and provision information of the controller. The priority comparator decides a priority of the MT on the CCBS service by the control and provision information of the controller. Upon receipt of a request for the priority of the MT from a network apparatus, the controller controls the priority analyzer to provide information on the MT. The controller controls the priority comparator to provide the priority of the MT on the CCBS service. The controller provides a response to the priority request including the received priority.

According to still another aspect of the present invention, there is provided a system for CCBS service in a mobile communication system. The system includes an MO, a network apparatus, and a MT. The MO sends a setup request to communicate with a MT. When the MT is in a telephony impossible state and has a high priority on the CCBS service, the MO receives a notification of preferential possible calls after the MT is converted to a telephony possible state. The network apparatus receives a setup request for the MT from the MO. The network apparatus sends a request for a priority of the MO on the CCBS service to the MT when the MT is in use of the CCBS service. The network apparatus receives the priority as a response. The network apparatus stores information on a call of the MO in a queue for CCBS service according to priority. The network apparatus sends to the MT a notification that the MT is in a telephony possibility state when the MT is in a reception possible state. The MT receives the request for the priority of the MO from the network apparatus and provides the priority as a response.

The present invention will become more apparent from the following detailed description when taken in conjunction with the accompanying drawings in which:
FIG. 1 illustrates a conventional CCBS service procedure;
FIG. 2 illustrates a CCBS service procedure according to an exemplary embodiment of the present invention;
FIG. 3 is a block diagram of a network apparatus for CCBS service according to an exemplary embodiment of the present invention;
FIG. 4 is a block diagram of a mobile terminal for CCBS service according to an exemplary embodiment of the present invention;
FIG. 5 is a flowchart of a procedure of operating a network apparatus for CCBS service according to an exemplary embodiment of the present invention; and
FIG. 6 is a flowchart of a procedure of operating a mobile terminal for CCBS service according to an exemplary embodiment of the present invention.

Preferred embodiments of the present invention will be described herein below with reference to the accompanying drawings. In the following description, well-known functions or constructions are not described in detail since they would obscure the invention in unnecessary detail.

Information, which represents a priority proposed in the present invention, is applicable to not only a CCBS service but also other supplementary services.

According to the present invention, in a CCBS service, a mobile terminal sets a priority to a telephone number to be processed preferentially. This is listed and referred to as a priority set.

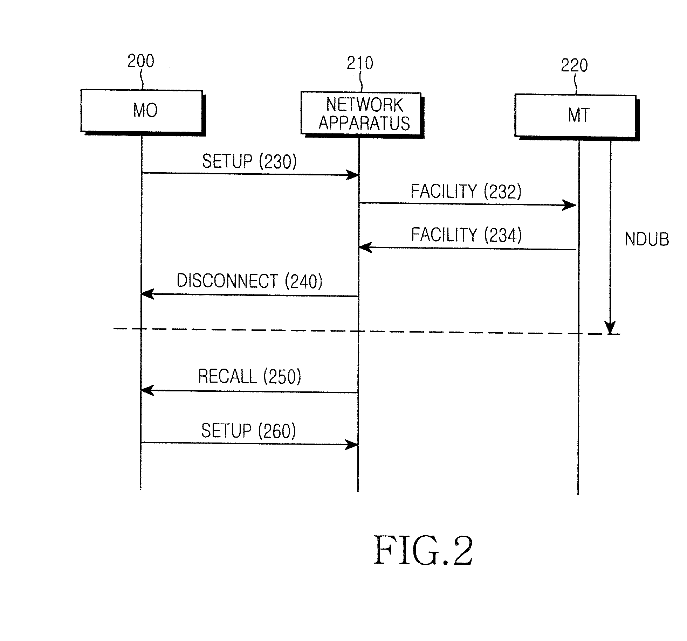

FIG. 2 illustrates a CCBS service procedure according to an exemplary embodiment of the present invention.

Referring to FIG. 2, in step 230, a Mobile Originator (MO) 200 transmits a setup request message (SETUP) and attempts to connect a call to a Mobile Terminal (MT) 220. After receiving the setup request message (SETUP), a network apparatus 210 determines whether to apply the CCBS service to the MT 220 when the MT 220 is presently in a Network Determined User Busy (NDUB) state. In step 232, the network apparatus 210 transmits to the MT 220 a priority request message (FACILITY) requesting a priority value of the MO 200 when applying the CCBS service. The priority request message (FACILITY) can include "NotifySS" for requesting a priority of the MO 200 on the CCBS service. The "NotifySS" can include "SS-Code" that represents the CCBS service and an address (a telephone number, etc.) of the MO 200. In other words, the network apparatus 210 transmits the priority request message (FACILITY) of step 232, for example, in the form of "Invoke=NotifySS(SS-Code = CCBS, Address of A)".

The MT 220 receiving the priority request message (FACILITY) searches the priority set. In step 243, the MT 220 includes a priority value of the MO 200, which is included in the priority request message (FACILITY), in a priority response message (FACILITY) and transmits the priority response message (FACILITY) to the network apparatus 210.

The priority response message (FACILITY) can include "PrioritySS" that represents a priority of the MO 200 on the CCBS service. The "PrioritySS" can include "SS-Code" that represents the CCBS service and a priority value of the MO 200. In other words, the MT 220 transmits the priority response message (FACILITY) of step 234, for example, in a form of "ReturnResult=Priority(SS-Code=CCBS, PriorityValue, etc)".

After receiving the priority response message (FACILITY) and detecting the priority of the MO 200, the network apparatus 210 stores in a queue according to the detected priority information on a call initiated by the MO 200. For example, a call initiated by the MO 200 is stored in a first position of the queue when a priority of the call initiated by the MO 200 is detected as "0" in a situation where a priority is all detected as "1".

In step 240, the network apparatus 210 transmits a circuit disconnect message (DISCONNECT) to the MO 200 and notifies that the MT 220 is in the NDUB state.

In step 250, the network apparatus 210 transmits to the MO 200 a setup possibility notification message (RECALL) in case where the MO 200 is out of the NDUB state and there is call information on the MO 200 in the queue for the CCBS service. In step 260, the MO 200 receiving the setup possibility notification message (RECALL) can resume a call procedure when the MT 220 is in the telephony possibility state.

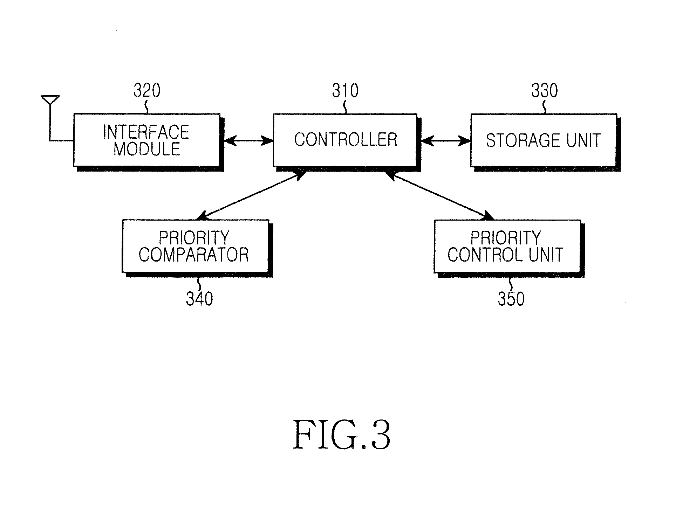

FIG. 3 is a block diagram of the network apparatus for the CCBS service according to an exemplary embodiment of the present invention.

Referring to FIG. 3, the network apparatus includes a controller 310, an interface module 320, a storage unit 330, a priority comparator 340, and a priority control unit 350.

The controller 310 controls a general operation for the CCBS service. For example, the controller 310 controls a priority comparator 340 to determine if a MT is using the CCBS service and receive the determination result. The controller 310 transmits a priority request message requesting a priority of an MO to the MT, receives a priority response message from the MT, provides the priority response message to the priority control unit 350, and stores call information on the MO in a queue for the CCBS service according to the priority. The controller 310 transmits a setup possibility notification message (RECALL) to the MO according to the priority when the MT is out of the NDUB state.

The priority comparator 340 determines if the MT is using the CCBS service by control and provision information of the controller 310, and provides the determination result to the controller 310.

The priority control unit 350 stores call information on the MO in a queue for the CCBS service according to the priority by the control and provision information of the controller 310.

The storage unit 330 stores a program for controlling a general operation of the apparatus and temporary data generated during the execution of various programs. Particularly, the storage unit 330 includes a queue for the CCBS service according to the present invention.

The interface module 320, a module for communicating with other nodes, can include a wired processor and a baseband processor. The wired processor receives an optical communication signal or other wired signals through an optical cable, converts the optical communication signal or other wired signals into a baseband signal, and provides the baseband signal to the baseband processor. The wired processor receives a baseband signal from the baseband processor, converts the baseband signal into an optical signal or other wired signals, and transmits the optical signal or other wired signals by a wired path.

In the above construction, the controller 310 can perform both functions of the priority comparator 340 and the priority control unit 350. Such separate construction and illustration of the present invention is to distinguish and describe the respective functions. Thus, when a product is actually realized, it can be either constructed for the controller 310 to process all of the functions of the priority comparator 340 and the priority control unit 350 or can be constructed for the controller 310 to process only a part of the functions.

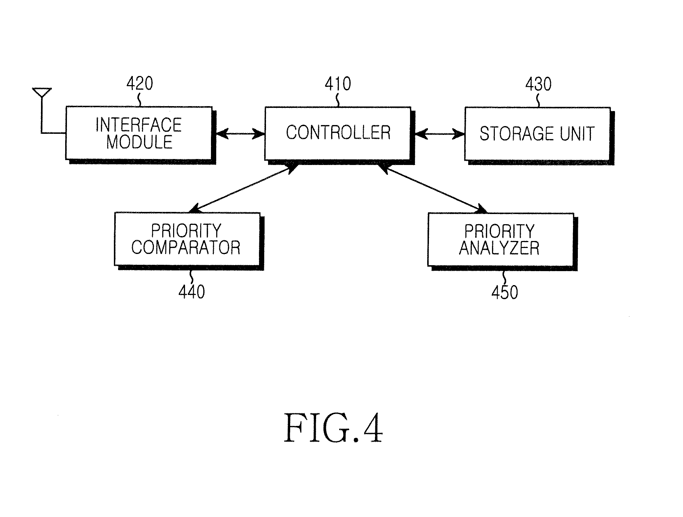

FIG. 4 is a block diagram of the MT for the CCBS service according to an exemplary embodiment of the present invention.

Referring to FIG. 4, the MT includes a controller 410, an interface module 420, a storage unit 430, a priority comparator 440, and a priority analyzer 450.

The controller 410 controls the overall operation for providing the CCBS service. For example, the controller 410 receives a priority request message from the network apparatus and provides the priority request message to the priority analyzer 450. The controller 410 controls the priority analyzer 450 to analyze and provide information (e.g., a telephone number) on a MO that is included in the priority request message. The controller 410 provides the information on the MO to the priority comparator 440 and controls the priority comparator 440 to compare the information on the MO with a priority set and provide a priority value of the MO. The controller 410 transmits to the network apparatus through the interface module 420 a priority response message including the priority value.

The priority analyzer 450 analyzes the information on the MO by control and provision information of the controller 420 and provides the analysis result to the controller 420.

The priority comparator 440 performs a comparison with a priority set by the control and provision information of the controller 410, decides the priority value of the MO, and provides the decision result to the controller 410.

The storage unit 430 stores a program for controlling the overall operation of the apparatus and temporary data generated during the execution of programs. Particularly, the storage unit 430 stores a priority set for a MO according to the present invention.

The interface module 420, a module for communicating with other nodes, includes a Radio Frequency (RF) processor and a baseband processor. The RF processor receives a signal through an antenna, converts the signal into a baseband signal, and provides the baseband signal to the baseband processor. The RF processor receives a baseband signal from the baseband processor, converts the baseband signal into an RF signal for actual transmission through the air, and transmits the RF signal through the antenna.

In the above construction, the controller 410 can perform both functions of the priority comparator 440 and the priority analyzer 450. Such separate construction and illustration of the present invention is to distinguish and describe the respective functions. Thus, when a product is actually realized, it could be either constructed for the controller 410 to process all of the functions of the priority comparator 440 and the priority analyzer 450 or could be constructed for the controller 410 to process only part of the functions.

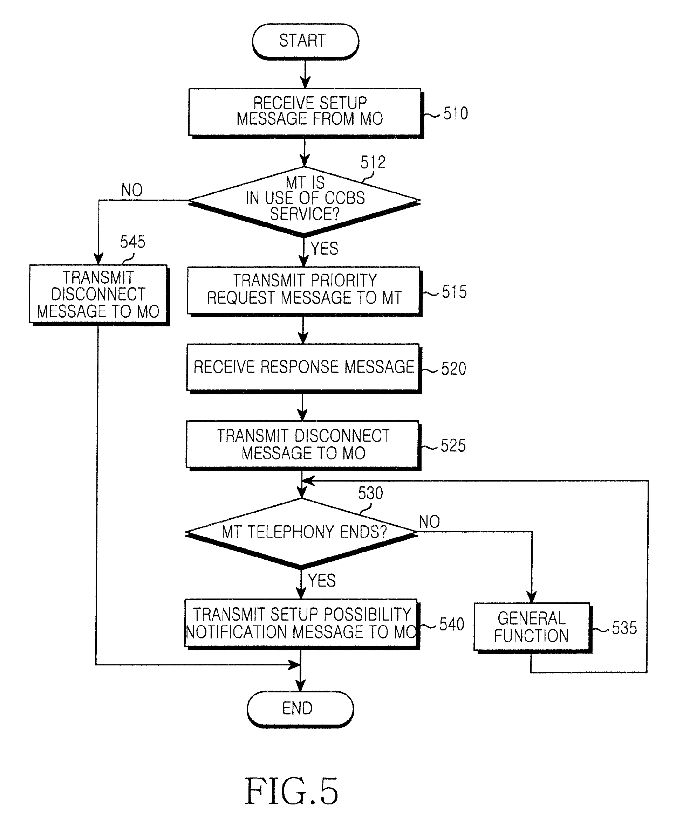

FIG. 5 is a flowchart of a procedure of operating the network apparatus for the CCBS service according to an exemplary embodiment of the present invention.

Referring to FIG. 5, in step 510, the controller of the network apparatus receives a setup request message from an MO. In step 512, the controller controls the priority comparator of the network apparatus to determine if an MT is using the CCBS service, and receives the determination result.

In step 515, the controller transmits to the MT a priority request message including information (e.g., a telephone number) on the MO and requests a priority value of the MO, when the MT is using the CCBS service.

In step 545, the controller transmits a circuit disconnect message (DISCONNECT) to the MO and signals that the MT is in the NDUB state, when the MT is not using the CCBS service.

In step 520, the controller receives from the MT a priority response message including the priority value, provides the priority response message to the priority control unit of the network apparatus, and stores call information on the MO in a queue according to the priority. In the case where the MO has the highest priority, the call information on the MO is stored in a first position of the queue.

In step 525, the controller transmits a circuit disconnect message to the MO and signals that the MT is in the NDUB state.

In step 530, the controller determines if the MT is out of the NDUB state. In step 540, the controller transmits a setup possibility notification message to the MO in a sequence of the call information stored in the queue, when it is determined that the MT is out of the NDUB state.

In step 535, the controller performs a general function (e.g., CCBS processing for another MO), when it is determined that the MT is in the NDUB state.

The process according to the present invention is terminated.

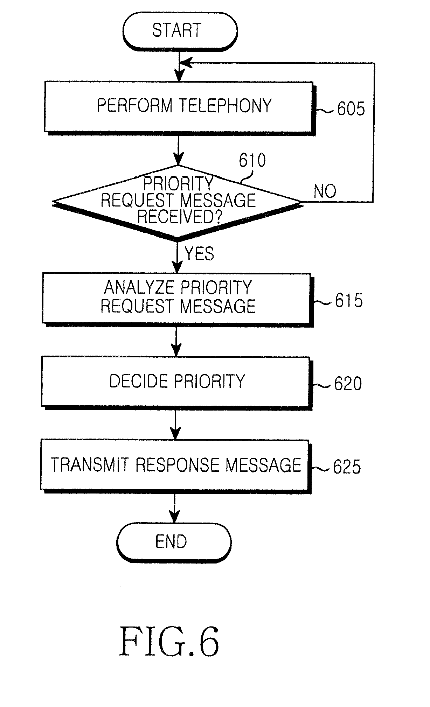

FIG. 6 is a flowchart of a procedure of operating the MT for the CCBS service according to an exemplary embodiment of the present invention.

Referring to FIG. 6, in step 605, the controller of the MT is assumed to be in a call connection state with a MO.

In step 610, the controller determines if it receives from the network apparatus a priority request message requesting a priority value of the MO. In step 615, the controller provides the priority request message to the priority analyzer and controls the priority analyzer to provide information (e.g., a telephone number) on the MO, when receiving the priority request message.

In step 620, the controller receives the information on the MO, provides the received information to the priority comparator, and controls the priority comparator to decide and provide a priority value of the MO according to a priority set.

In step 625, the controller transmits to the network apparatus a priority response message including the priority value of the MO.

The process according to the present invention is then terminated.

As described above, the present invention can apply a priority to a given CCBS service and thus, upon setting of a high priority to a call of a MT, can receive a notification about the call even when a capacity of a queue for storing information on a call not received in the NDUB state is exceeded. Also, information, which is the representation of a priority according to the present invention, is applicable to not only the CCBS service but also other supplementary services.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the scope of the invention as defined by the appended claims.

## Claims

1. A method for a Call Completion to Busy Subscriber, CCBS, service in a mobile communication system, the method comprising:
determining if a mobile terminal is in a telephony possibility state when a network apparatus receives a setup request for the mobile terminal from a mobile originator;
when the mobile terminal is not in a telephony possibility state, determining if the mobile terminal is using the CCBS service;
when the mobile terminal is using the CCBS service, sending to the mobile terminal a request for a priority of the mobile originator;
transmitting, by the mobile terminal to the network apparatus, a response including the priority;
storing, by the network apparatus receiving the response, in a queue of the network apparatus according to the priority included in the response information on a call of the mobile originator; and
when the mobile terminal is in a telephony possibility state, sending, by the network apparatus, a notification of possible calls in a sequence of the call information stored in the queue to the mobile originator.

2. The method of claim 1, wherein in the sending to the mobile terminal of the request for the priority, the network apparatus transmits a message, which includes information representing the CCBS service and address information on the mobile originator, to send a request for a priority on CCBS service.

3. The method of claim 1 or 2, wherein in the step of transmitting of the response including the priority, the mobile terminal transmits to the network apparatus a message, which includes information representing the CCBS service and a priority value of the mobile originator, to provide the priority value of the mobile originator.

4. The method of one of claims 1 to 3, wherein in the step of storing the information on the call of the mobile originator, the call information is stored so that information on a high-priority call is processed before information on a low-priority call.

5. A network apparatus for a Call Completion to Busy Subscriber, CCBS, service in a mobile communication system, the apparatus comprising:
a priority comparator for determining if a mobile terminal not being presently in a telephony possibility state is using the CCBS service by control and provision information of a controller;
a priority control unit for storing call information on an mobile originator in a queue for the CCBS service according to a priority by the control and provision information of the controller; and
the controller for, upon receipt of a setup request for the mobile terminal from an mobile originator, controlling the priority comparator to determine if the mobile terminal is using the CCBS service, sending a request for a priority of the mobile originator to the mobile terminal, receiving and providing the priority control unit with a response to the priority, controlling the priority control unit to store call information according to the priority, and when the mobile terminal is in a possible telephony state, sending a notification of telephony possibility in a sequence of the call information stored in the queue to the mobile originator.

6. The apparatus of claim 5, wherein the controller transmits to the mobile terminal a message, which includes information representing the CCBS service and address information on the mobile originator, and sends a request for a priority of the mobile originator on CCBS service.

7. The apparatus of claim 5 or 6, wherein the response received and provided by the controller to the priority control unit is a message including information representing the CCBS service and a priority value of the mobile originator for the mobile terminal to provide to the network apparatus a priority value of the mobile originator.

8. The apparatus of one of claims 5 to 7, wherein the priority control unit stores the call information so that information on a high-priority call is processed before information on a low-priority call.

9. A mobile terminal for a Call Completion to Busy Subscriber, CCBS, service in a mobile communication system, the terminal comprising:
a priority analyzer for acquiring information on a mobile terminal by a control and provision information of a controller;
a priority comparator for deciding a priority of the mobile terminal on the CCBS service by the control and provision information of the controller; and
the controller for, upon receipt of a request for the priority of the mobile terminal from a network apparatus, controlling the priority analyzer to provide information on the mobile terminal, controlling the priority comparator to provide the priority of the mobile terminal on the CCBS service, and providing a response to the priority request including the received priority.

10. The terminal of claim 9, wherein the controller receives a message including information representing the CCBS service and address information on the mobile originator and receives a request for a priority of the mobile terminal, for the network apparatus to send a request for a priority on the CCBS service to the mobile terminal.

11. The terminal of claim 9, wherein the controller transmits a message including information representing the CCBS service and a priority value of a mobile originator and provides a response to the request for the priority, for the mobile terminal to provide the priority value of the mobile originator to the network apparatus.

12. A system for a Call Completion to Busy Subscriber, CCBS, service in a mobile communication system, the system comprising:
an mobile originator for sending a setup request to communicate with a mobile terminal and, when the mobile terminal is in a telephony impossible state and has a high priority on the CCBS service, receiving a notification of preferential possible telephony after the mobile terminal is converted to a telephony possible state;
a network apparatus for receiving a setup request for the mobile terminal from the mobile originator, sending a request for a priority of the mobile originator on the CCBS service to the mobile terminal when the mobile terminal is in use of the CCBS service, receiving the priority as a response, storing information on a call of the mobile originator in a queue for the CCBS service according to priority, and sending to the mobile terminal a notification that the mobile terminal is in a telephony possibility state when the mobile terminal is in a reception possible state; and
the mobile terminal for receiving the request for the priority of the mobile originator from the network apparatus and providing the priority as a response.

13. The system of claim 12, wherein the request for the priority of the mobile originator sent from the network apparatus to the mobile terminal is performed by transmitting a message including information representing the CCBS service and address information on the mobile originator.

14. The system of claim 12 or 13, wherein the response to the priority request including the priority sent from the mobile terminal to the network apparatus is performed by transmitting a message including information representing the CCBS service and a priority value of the mobile originator.

15. The system of one of claims 12 to 14, wherein the network apparatus stores the call information so that information on a high-priority call is processed before information on a low-priority call.

16. A method of a network apparatus for a Call Completion to Busy Subscriber, CCBS, service, the method comprising:
determining if a mobile terminal is in a telephony possibility state when a network apparatus receives a setup request for the mobile terminal from a mobile originator;
determining if the mobile terminal is using the CCBS service when the mobile terminal is not in a telephony possibility state,;
sending to the mobile terminal a request for a priority of the mobile originator when the mobile terminal is using the CCBS service;
receiving a response including the priority of the mobile originator;
storing information about a call of the mobile originator in a queue of the network apparatus according to the priority included in the response; and
sending the information about the telephony possibility state to the mobile originator when the mobile terminal is in a telephony possibility state,

17. A method of a mobile terminal for a Call Completion to Busy Subscriber, CCBS, service, the method comprising:
determining whether the mobile terminal receives the request for a priority of a mobile originator from a network apparatus;
searching the priority when the mobile terminal receives the request for a priority of the mobile originator; and
sending a response including the priority of the mobile originator to the network apparatus.

18. A computer-readable recording medium having recorded thereon a program for Call Completion to Busy Subscriber, CCBS, service in a mobile communication system, comprising;
a first code segment for determining if a mobile terminal is in a telephony possibility state when a network apparatus receives a setup request for the mobile terminal from a mobile originator;
a second code segment for determining if the mobile terminal is using the CCBS service when the mobile terminal is not in a telephony possibility state;
a third code segment for sending to the mobile terminal a request for a priority of the mobile originator when the mobile terminal is using the CCBS service;
a fourth code segment for receiving a response including the priority of the mobile originator;
a fifth code segment for storing information on a call of the mobile originator in a queue of the network apparatus according to the priority included in the response; and
a sixth code segment for sending the information about the telephony possibility state to the mobile originator when the mobile terminal is in a telephony possibility state,

19. A computer-readable recording medium having recorded thereon a program for Call Completion to Busy Subscriber, CCBS, service in a mobile communication system, comprising;
a first code segment for determining whether the mobile terminal receives the request for a priority of a mobile originator from a network apparatus;
a second code segment for searching the priority when the mobile terminal receives the request for a priority of the mobile originator; and
a third code segment for sending a response including the priority of the mobile originator to the network apparatus.
